# EUROPEAN PATENT APPLICATION

(11) **EP 4 671 000 A1**
(43) Date of publication of application: **31.12.2025**
(21) Application number: 24222418.6
(22) Date of filing: 20.12.2024
(51) Int. Cl.: B60B 3/14, B60B 3/16

(54) **WHEEL HUB LOCKING SYSTEM**

(30) Priority: 24.06.2024 EP 24183889
(71) Applicant: A. AGRATI S.p.A., 20837 Veduggio con Colzano-Monza Brianza (IT)
(72) Inventor: CONFALONIERI, Antonio, 23855 Pescate (IT); MAURI, Walter, 22030 Eupilio (IT); FONTEMAGGI, Mattia, 22066 Mariano Comense (IT); TORRESANI, Alessandro, 37054 Nogara (IT); PUSKARICA, Luka, 20126 Milano (IT)
(74) Representative: Conti, Marco

(57) **Abstract**

Locking assembly (16) for securing a wheel rim (12) to a wheel hub (14) of a vehicle, comprising a locking element (18) with a cylindrical extension (28) along the wheel hub main axis (A1), having a first threaded section (32) complementary to a hub second threaded section (34), wherein the locking element (18) has at least one securing means (42) which is movable between a locking position and a release position, said securing means (42) comprising a retaining part (56) which faces a corresponding abutment surface (58) arranged on a hub central tubular portion (60), when the securing means (42) is in its locking position, in such a way that, in the locking position, loosening of the locking element (18) with respect to the wheel hub (14) is prevented by engagement of said retaining part (56) with said abutment surface (58).

## Description

### TECHNICAL FIELD

The present invention relates to a locking assembly and a locking system for securing a wheel rim to a wheel hub of a vehicle, in particular for a central locking wheel bearing for a motor vehicle.

### BACKGROUND

In order to fasten a wheel rim to a wheel bearing of a motor vehicle, it is known to use three to six nuts or screws which are arranged at regular angular intervals around a central wheel axle. The bolts or nuts are connected to the wheel bearing and fix the wheel rim to the wheel bearing.

It is also known, particularly for sports cars, to use a central locking system in order to be able to fasten the wheel rim by means of a single screw element. This makes it easier for changing the wheels or rims to replace them more quickly.

In the case of a central locking assembly, the axis of rotation of the wheel is identical to the axis of the locking element. Consequently, high torque occurring during acceleration or braking of the vehicle can lead to the locking element to unscrew accidentally and to a loss of the wheel.

Various solutions have been proposed to solve this problem. However, existing solutions tend to be complex and difficult to manufacture or to assemble.

The present invention aims at improving such a locking assembly and locking system with a solution which is more reliable and still easy to implement when changing the wheel on a vehicle.

### SUMMARY

The scope of protection is set out by the claims.

A first aspect concerns a locking assembly for securing a wheel rim to a wheel hub of a vehicle, comprising a locking element with a cylindrical extension along the wheel hub main axis, having a first threaded section complementary to a hub second threaded section, wherein the locking element has at least one securing means which is movable between a locking position and a release position, said securing means comprising a retaining part which faces a corresponding abutment surface arranged on a hub central tubular portion, when the securing means is in its locking position, in such a way that, in the locking position, loosening of the locking element with respect to the wheel hub is prevented by engagement of said retaining part with said abutment surface.

According to a further embodiment said hub central tubular portion comprises an outer peripheral groove, a first axial end edge of which forming said abutment surface.

According to a further embodiment said hub central tubular portion comprises an outer ratchet ring, a tooth of which comprising a retaining edge forming said abutment surface.

According to a further embodiment the at least one securing means comprises a control surface which is configured to cooperate with a release extension of a screw tool to move the at least one securing means towards its release position.

According to a further embodiment the locking element comprises a sleeve portion provided with at least one opening, said retaining part being able to move through the at least one opening between the release position and the locking position.

According to a further embodiment the at least one securing means is biased towards the locking position thanks to a return spring.

According to a further embodiment the securing means comprises at least one locking lever which is pivotable about a pivot axle parallel to the wheel hub main axis.

According to a further embodiment said retaining part is arranged on a locking lever first arm portion and said control surface is arranged on a locking lever second arm portion, said pivot axle being positioned between said locking lever first arm portion and said locking lever second arm portion.

According to a further embodiment each locking lever has an attachment portion for a return spring first end, a return spring second end being attached to a locking element attachment portion.

According to a further embodiment said securing means comprises at least three locking levers distributed regularly around the wheel hub main axis.

According to a further embodiment the locking element comprises an annular receiving portion able to receive into engagement a screw tool complementary annular engagement portion.

According to a further embodiment the annular receiving portion comprises a plurality of engagement cavities complementary to screw tool engagement pins.

A second aspect concerns a locking system comprising the locking assembly according to one of the previous mentioned embodiment, comprising a screw tool having at least one annular engagement portion complementary to an annular receiving portion of the locking element and having a central release extension configured to cooperate with said securing means control surface to move said securing means into their release position when the screw tool is engaged with the locking element for screwing or unscrewing.

### BRIEF DESCRIPTION OF THE DRAWINGS

Example embodiments will be more fully understood from the detailed description provided herein and the accompanying drawings, which are given by way of illustration only. In the present description and in the drawings.
FIG.1 is a perspective view showing schematically a locking system according to a first embodiment comprising a locking assembly retaining a wheel rim on a wheel hub and a screw tool before or after engagement with the locking assembly;
FIG.2 is an exploded view showing the locking assembly of figure 1;
FIG.3 is a cross section according to plan III-III showing the locking assembly of figure 1 with the screw tool engaged with the locking assembly;
FIG.4 is a perspective view in cross section according to plan III-III showing the locking assembly of figure 1 with the screw tool disengaged from the locking assembly;
FIG.5 is a similar view to figure 4 showing the locking element pertaining to the locking assembly with the protective cap removed and without the wheel hub;
FIG.6 is a front perspective view showing the locking element of figure 5 wherein two locking levers are represented in a release position and one locking lever is represented in a locking position;
FIG.7 is a perspective view showing a locking lever with its control surface;
FIG.8 is a perspective view in cross section showing a second embodiment of a locking assembly wherein the locking element is designed as a bolt or nut part instead of a screw part and the wheel hub comprises an external thread designed to cooperate with an internal thread of the locking element.

It should be noted that these figures are intended to illustrate the general characteristics of methods, structure and/or materials utilized in the described exemplary embodiments. The drawings are not to scale and should not be interpreted as limiting the range of values or properties encompassed by the exemplary embodiments.

### DETAILED DESCRIPTION

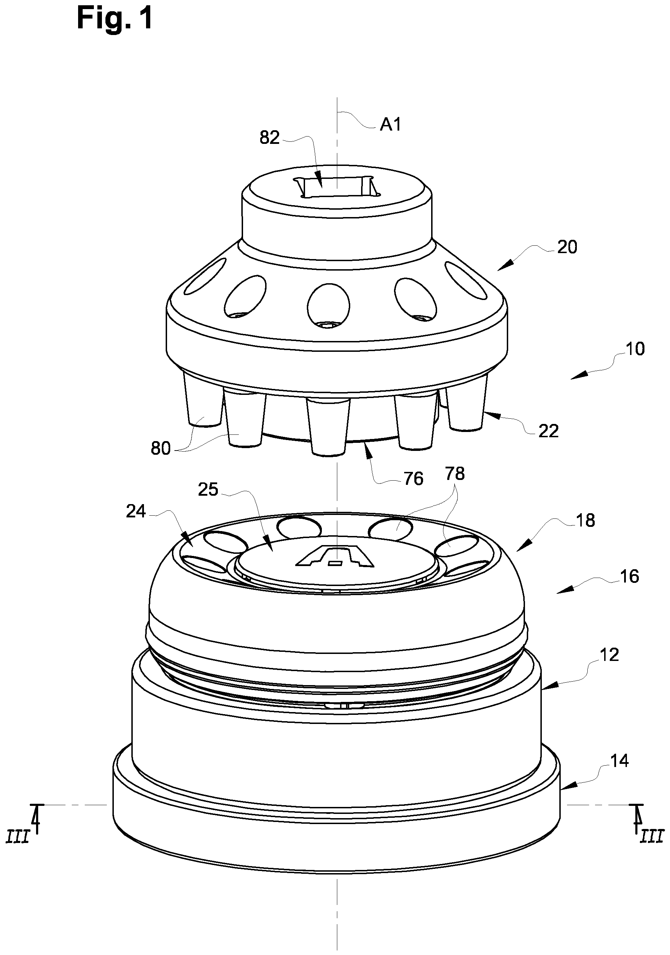

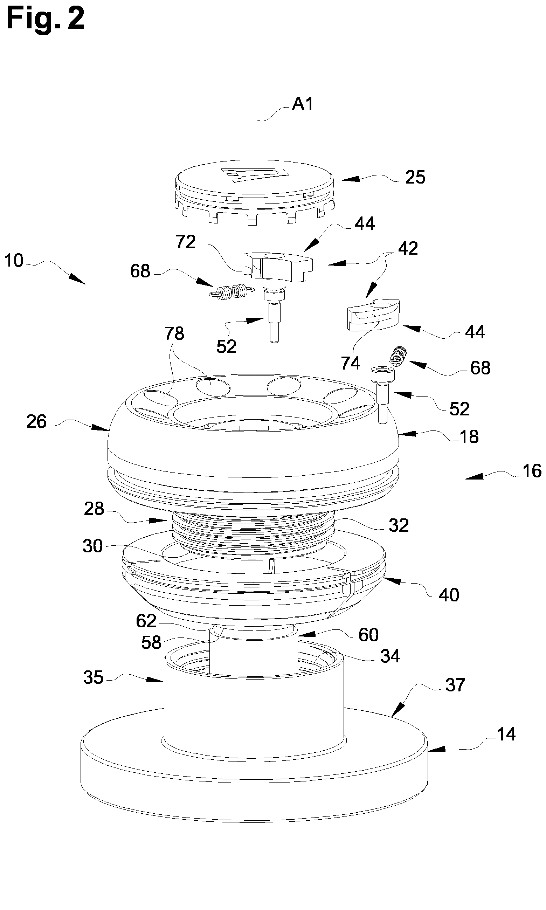

Figures 1 and 2 show a first embodiment of a locking system 10 for securing a wheel rim 12 to a wheel hub 14 of a vehicle (not shown) having a main axis A1. For illustration purposes, the wheel rim 12 is schematically represented on figure 1 as a simple ring shape part.

In the following description, outward and inward will be used to define position of parts relative to the main axis A1.

The locking system 10 comprises a locking assembly 16 for securing the wheel rim 12 to the wheel hub 14 thanks to a locking element 18. The locking system 10 also comprises a screw tool 20 which includes an annular engagement portion 22 complementary to an annular receiving portion 24 of the locking element 18.

According to the example embodiment shown, the screw tool 20 is designed to be driven by a rotary drive tool (not shown) in view to allow screwing and unscrewing of the locking element 18 with regards to the wheel hub 14. Further explanations will be given later in the following description.

On figure 1 and 2, a protective cap 25 is also represented.

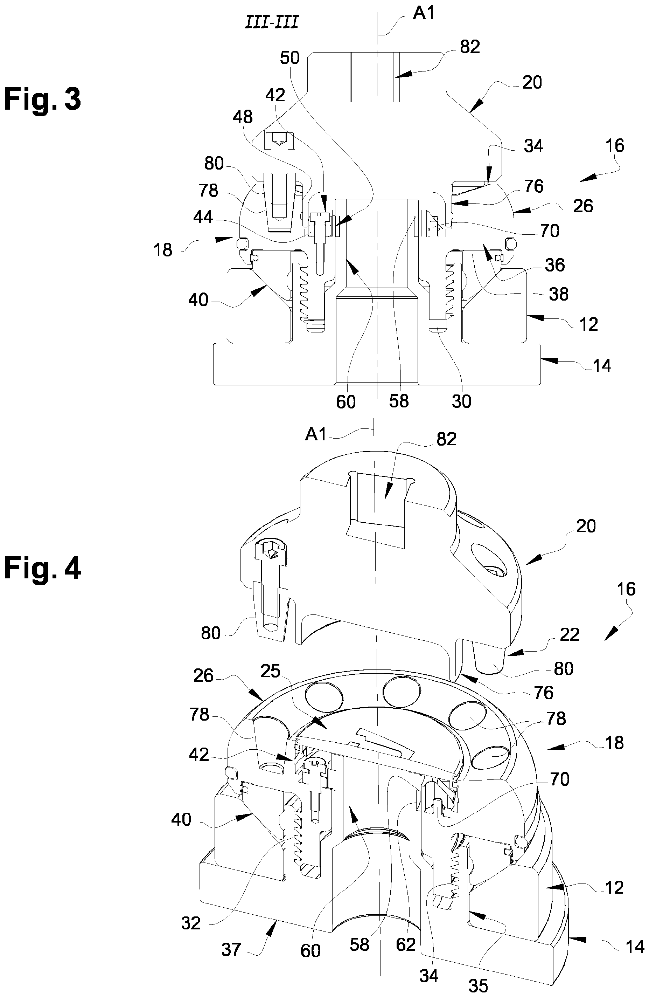

Referring now also to figures 3 to 5, the locking element 18 comprises a main body 26 having an annular shape forming a central bore 27 and having a cylindrical extension 28 which extends axially along the main axis A1 until a free end 30 on the side of the wheel hub 14. Said locking element cylindrical extension 28 comprises a first threaded section 32 on its external surface which is complementary to a wheel hub second threaded section 34.

The wheel hub 14 is provided with a peripheral tubular portion 35 extending from a wheel hub base part 37 and provided internally with said second threaded section 34.

The locking element main body 26 comprises a flange portion 36 opposite the cylindrical extension free end 30, said flange portion 36 forming the annular receiving portion 24 on a first side and forming a radial abutment surface 38 on a second side.

According to the first embodiment, an annular conical ring 40 is mounted between the locking element radial abutment surface 38 and the wheel rim 12 in order to hold the wheel rim 12 tightly between the annular conical ring 40 and the opposite surface on the wheel hub 14.

Alternative embodiments for holding the wheel rim 12 in position against the wheel hub 14 are also possible, with or without an intermediate part like the annular conical ring 40. Also the annular conical ring 40 could be of different shape, for example it could be an annular hemispherical ring or an annular flat ring.

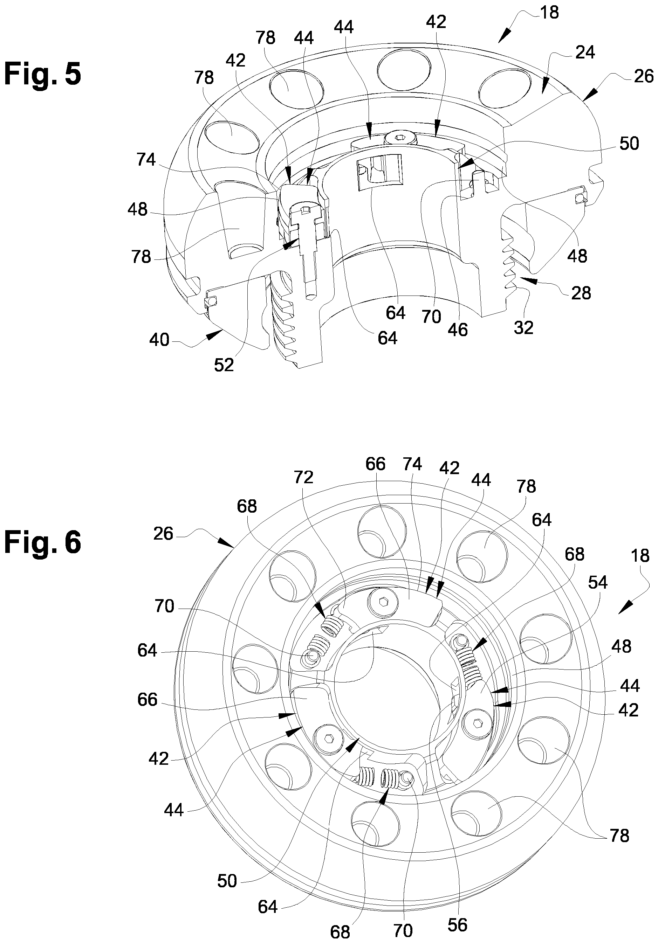

The locking element 18 has at least one securing means 42 which is movable between a locking position and a release position. Such securing means 42 are best shown on figures 5 and 6.

In accordance with the embodiment shown, said at least one securing means 42 comprises three locking levers 44 which are pivotally mounted on a main body annular shoulder 46, radially between said annular receiving portion 24 and said main body central bore 43. More particularly, the main body annular shoulder 46 is delimited outwardly by an annular receiving portion internal wall 48 and inwardly by a sleeve portion 50.

Here the sleeve portion 50 extends axially opposite the wheel hub 14 from the cylindrical extension 28.

The three locking levers 44 are distributed angularly regularly around the main axis A1.

Each locking lever 44 comprises a pivot axle 52 allowing said locking lever 44 to tilt between a locking position, illustrated by the lever 44 on the bottom right side in figure 6, and a release position, illustrated by the other levers 44 of figure 6.

Although two locking levers 44 are shown in their release position on figure 6, one should note that it is only for illustration purpose since their default position, as it will be explained later, is their locking position, provided the locking element 18 is removed from the wheel hub 14.

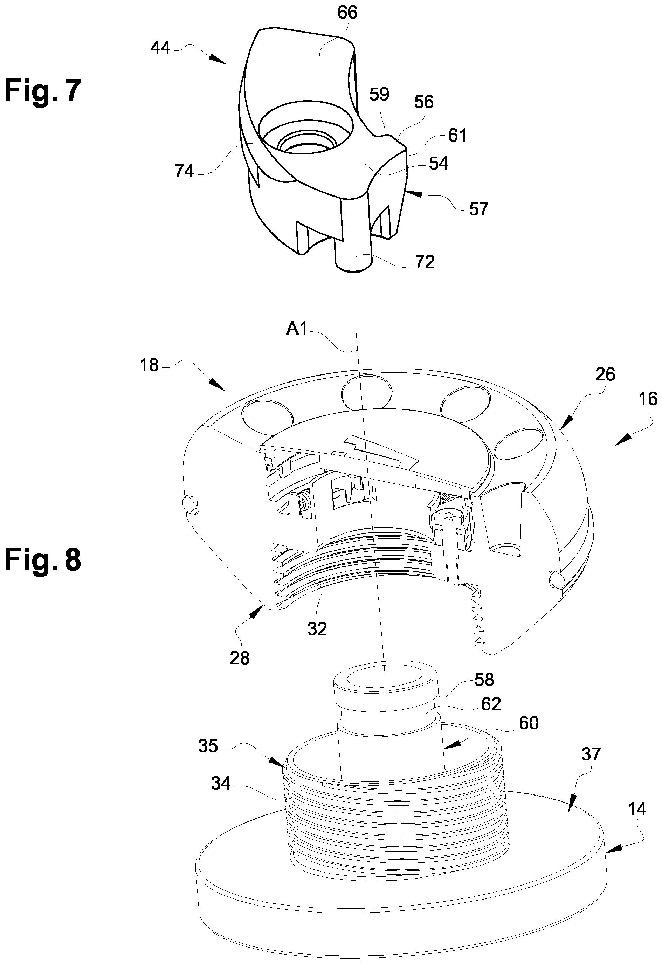

Figure 7 shows a locking lever 44 in an enlarged view.

Each locking lever 44 has a first arm portion 54 which is provided with a retaining part 56 which has a top surface 59 in the example of figure 7 that is configured to axially face a corresponding abutment surface 58 arranged on a hub central tubular portion 60, when the locking lever 44 is in its locking position.

As can be seen on figure 2 and 4, said hub central tubular portion 60 extends axially towards the locking element 18 from the wheel hub base part 37, coaxially to and over the hub peripheral tubular portion 35. Said hub central tubular portion 60 is provided, close to its free end, with an outer peripheral groove 62. A first axial end edge of said outer peripheral groove 62 forms a radial surface which constitutes said abutment surface 58.

When the locking lever 44 is in its locking position, the first arm portion 54 extends through a corresponding opening 64 of the sleeve portion 50.

Each locking lever 44 has a second arm portion 66, opposite the first arm portion 54, which comes into contact with the annular receiving portion internal wall 48 when in its locking position as shown on figure 6.

A return spring 68 is mounted between each locking lever 44 and a stud 70 to bias the locking lever 44 towards its locking position. In the present embodiment, said return spring 68 is a helical traction spring which pulls on the first arm portion 54. Said return spring 68 is attached to the first arm portion 54 thanks to an attachment portion 72, for example an attachment pin.

Advantageously, the positioning of the securing means 42 on the locking element 18, and more particularly the radial position of each pivot axle 52 with regards to the corresponding stud 70, is chosen and configured such that centrifugal forces applied to the locking assembly 16 when the wheel is rotating bias the locking levers 44 towards their locking position. Therefore it is important to position the center of gravity of each locking lever 44 to make sure centrifugal forces will enforce the locking levers 44 in their safety configuration during wheel rotation at any speed.

Advantageously, the second arm portion 66 comprises a control surface 74 which is configured to cooperate with a release extension 76 of the screw tool 20 to move the locking lever 44 towards its release position when the screw tool 20 is engaged with the locking element annular receiving portion 24. Here the release extension 76 is constituted of a tubular extension which has an external diameter close to the internal diameter of the annular receiving portion internal wall 48.

In the present embodiment, said control surface 74 is an angled surface arranged on the upper face of the locking lever 44, when considering figure 7, on an outwardly facing edge with regards to the main axial A1.

Advantageously, the opening 64 has a substantially square shape and its axial dimension is close to the axial dimension of the first arm portion 54 extending through the opening 64 in the locking position. Such an arrangement provides good retainment and guiding of the first arm portion 54 to ensure a robust locking effect.

According to the embodiment shown, the annular receiving portion 24 comprises a plurality of engagement cavities 78 complementary to engagement pins 80 provided on the screw tool annular engagement portion 22. Said engagement cavities 78 and engagement pins 80 can have a frustoconical shape as illustrated on the figures. In order to ensure good engagement for proper rotation driving, it is preferable to have a certain number of engagement pins 80 allowing good distribution of torque forces around the main axis A1 when screwing or unscrewing the locking element 18.

Figures 1 and 4 shows the locking system 10 before engagement or after extraction of the screw tool 20 into or from the locking element 18. Figure 3 shows the locking system 10 when the screw tool 20 is engaged into the locking element 18 and ready to unscrew the locking element 18 from the wheel hub 14.

In the example shown, the screw tool 20 is provided with a square cavity 82 complementary to the end of a drive shaft of a rotary drive tool (not shown).

A method of securing the wheel rim 12 to the wheel hub 14 using the locking system 10 will now be described.

Firstly, the wheel rim 12 is positioned on the wheel hub 14, around the wheel hub peripheral tubular portion 35.

Secondly, the annular conical ring 40 is positioned over the wheel rim 12 central portion, around the wheel hub peripheral tubular portion 35.

Thirdly, the locking element 18 is positioned with its first threaded section 32 facing the wheel hub second threaded section 34, allowing the locking element 18 to be screwed into the wheel hub peripheral tubular portion 35, from the preliminary axial position shown on figure 2 toward the locking axial position shown on figures 3, 4, and 5. Screwing of the locking element 18 is done preferably by using the corresponding screw tool 20. However, it is also convenient to start screwing the locking element 18 by hand and finalize screwing with the screw tool 20.

By engaging the screw tool annular engagement portion 24, with the engagement pins 80 engaged into the corresponding engagement cavities 78, as shown on figure 3, and by driving the screw tool 20 using a rotary drive tool (not shown), the locking element 18 can be driven into the screwing or unscrewing direction.

The securing means 42 have an auto-engagement function. Each locking lever 44 comprises a front lower chamfer surface 57 arranged below the top surface 59 of the retaining part 56. Thus, when the locking element 18 is pre-screwed by hand, each locking lever 44 slides along the sleeve portion 50 until top surface 59 of the retaining part 56 itself passes through the corresponding window 64 and engages the outer peripheral groove 62 on the center tubular portion 60. This way the locking levers 44 correct position can be easily checked at sight. Then the final tightening can be performed with the screw tool 20.

As explained before, in the configuration illustrated on figures 1, 4, 5, and 6, when the screw tool 20 is disengaged from the locking element 18, the securing means 42 are in the locking position. It means that all locking levers 44 are in their locking position wherein their retaining part 56 is located inside the central bore 27, their first arm portion 54 extending partially through the corresponding opening 64. When the locking element 18 is mounted onto the wheel hub 14, then the retaining parts 56 of the locking levers 44 are received in the outer peripheral groove 62 of the central tubular portion 60, and the top surfaces 59 of said retaining parts 56 are facing axially the abutment surface 58, preventing the locking element 18 to slide away from the wheel hub 14. Thus, thanks to the securing means 42, loosening of the locking element 18 with respect to the wheel hub 14 is prevented.

In order to allow removal of the locking element 18 from the wheel hub 14, it is necessary to move the locking levers 44 from their locking position to their release position. This is achieved by inserting the screw tool release extension 76 into the locking element main body 26, and more particularly in the radial space between the internal wall 48 and the locking levers 44.

During axial displacement of the screw tool 20 towards the locking element 18, the tip of the release extension 76 cooperates with the control surface 74 of each locking lever 44 by urging each locking lever 44 towards its release position. By doing so, the first arm portion 54 of each locking lever 44 moves inwardly through the corresponding opening 64, such that there is no more axial facing between the top surfaces 59 of the retaining parts 56 and the abutment surface 58.

A second embodiment of the locking system 10 is represented on figure 8 wherein the locking element 18 is made as a bolt element instead of a screw element. The first threaded section 32 is an internal threaded section arranged on an internal surface of the main body 26. Said first threaded section 32 is designed to cooperate with the second threaded section 34 of the wheel hub 14 which is arranged on an external surface of the peripheral tubular portion 35.

In this embodiment, the annular conical ring 40 is made of one piece with the main body 26.

The operating method of the locking system 10 of figure 8 is substantially identical to the operating method of the locking system 10 as the securing means 42 are the same.

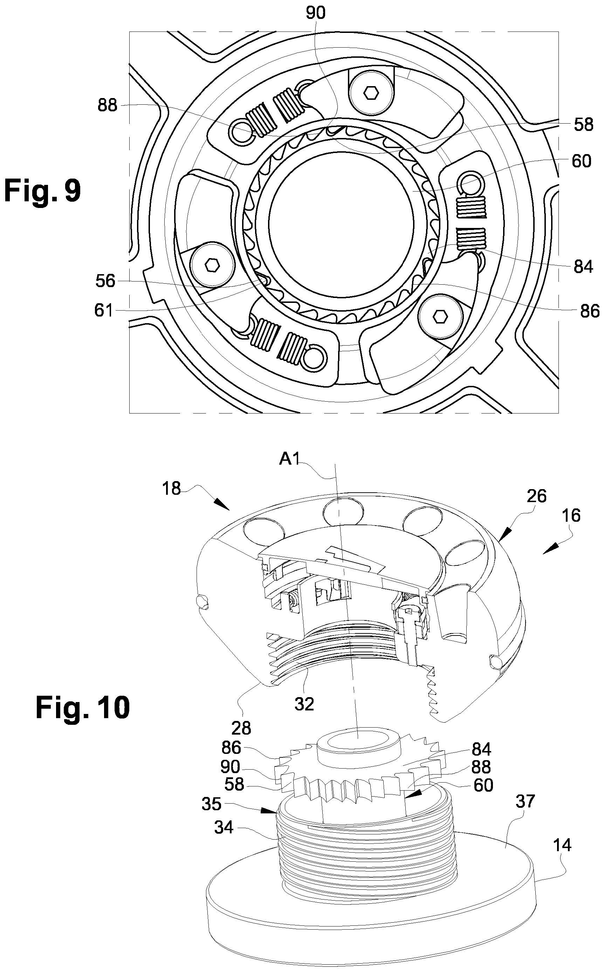

A third embodiment of the locking system 10 is represented on figures 9 and 10 wherein the hub central tubular portion 60 comprises an outer ratchet ring 84. Indeed, the hub central tubular portion 60 is provided, close to its free end, with the outer ratchet ring 84. The outer ratchet ring 84 is integral with the bub central tubular portion 60. The outer ratchet ring 84 is coaxial with the hub central tubular portion 60. The outer ratchet ring 84 comprises a series of teeth 86 arranged so that the outer ratchet ring 84 has radial symmetry. The teeth 86 are integral saliences. The teeth 86 are uniform, but each tooth 86 is asymmetrical. Each tooth 86 has a moderate slope on one edge called oblique edge 88 and a much steeper slope on the other edge called retaining edge 90.

Each locking lever 44 acts as a pawl and the retaining part 56 engages the teeth 86. In the example of figures 9 and 10, the retaining part 56 has a vertical surface 61 designed to cooperate with a retaining edge 90 of a tooth. More precisely, the vertical surface 61 of the retaining part 56 is designed to engage the retaining edge 90 in a locking position of the securing mean 42 such that the retaining edge 90 forms the abutment surface 58.

When the locking element 18 is rotating in the tightening direction, the retaining part 56 easily slides up and over the oblique edges 88 of the teeth 86, with the spring 68 forcing the retaining part 56 into the depression between the teeth 86 as it passes the tip of each tooth 86. When the locking element 18 moves in the opposite direction, that is to say in the loosening direction, the retaining part 56 will catch against the retaining edge 90 of the first tooth it encounters, thereby locking the retaining part 56 against the retaining edge 90 of the tooth 86 and preventing any further motion in that direction.

In the illustrated example, the retaining edge 90 extends in a substantially radial plane.

In the third embodiment, similarly to the first embodiment and to the second embodiment, when the screw tool 20 is disengaged from the locking element 18, the securing means 42 are in the locking position. It means that all locking levers 44 are in their locking position wherein their retaining part 56 is located inside the central bore 27, their first arm portion 54 extending partially through the corresponding opening 64. When the locking element 18 is mounted onto the wheel hub 14, the retaining parts 56 of the locking levers 44 are in contact with the outer ratchet ring 84 of the central tubular portion 60. The locking element 18 is tightened until the retaining parts 56 are engaged against the abutment surface 58, preventing the locking element 18 to be unscrewed when the locking levers 44 are in the locking position. Indeed, the locking element 18 can only rotate in the tightening direction when the locking levers 44 are in the locking position. Thus, thanks to the securing means 42, loosening of the locking element 18 with respect to the wheel hub 14 is prevented.

In order to allow removal of the locking element 18 from the wheel hub 14, it is necessary to move the locking levers 44 from their locking position to their release position. This is achieved by inserting the screw tool release extension 76 into the locking element main body 26, and more particularly in the radial space between the internal wall 48 and the locking levers 44.

During axial displacement of the screw tool 20 towards the locking element 18, the tip of the release extension 76 cooperates with the control surface 74 of each locking lever 44 by urging each locking lever 44 towards its release position. By doing so, the first arm portion 54 of each locking lever 44 moves inwardly through the corresponding opening 64, such that there is no more contact between the vertical surface 61 of the retaining parts 56 and the abutment surface 58 that is the retaining edge 90.

Other alternative embodiments are possible for the locking system 10. For example, the number of locking levers 44 can be different, or the shape of the locking levers 44 could be different. The arrangement and the type of return spring 68 could be different.

### LEGEND

10 : locking system
12 : wheel rim
14 : wheel hub
16 : locking assembly
18 : locking element
20 : screw tool
22 : annular engagement portion
24 : annular receiving portion
26 : main body
27: central bore
28 : cylindrical extension
30 : free end
32 : first threaded section
34 : second threaded section
35: peripheral tubular portion
36 : flange portion
37: wheel hub base part
38 : radial abutment surface
40 : annular conical ring
42 : securing means
43: central bore
44: locking lever
46 : annular shoulder
48 : internal wall
50 : sleeve portion
52 : pivot axle
54 : first arm portion
56 : retaining part
57: front lower chamfer surface
58 : abutment surface
59 : top surface
60: central tubular portion
61 : vertical surface
62 : outer peripheral groove
64: opening
66 : second arm portion
68 : return spring
70 : stud
72 : attachment portion
74 : control surface
76 : release extension
78 : engagement cavities
80 : engagement pins
82: square cavity
84 outer ratchet ring
86 tooth
88 oblique edge
90 retaining edge
A1: main wheel axis

## Claims

1. Locking assembly (16) for securing a wheel rim (12) to a wheel hub (14) of a vehicle, comprising a locking element (18) with a cylindrical extension (28) along the wheel hub main axis (A1), having a first threaded section (32) complementary to a hub second threaded section (34), wherein the locking element (18) has at least one securing means (42) which is movable between a locking position and a release position, said securing means (42) comprising a retaining part (56) which faces a corresponding abutment surface (58) arranged on a hub central tubular portion (60), when the securing means (42) is in its locking position, in such a way that, in the locking position, loosening of the locking element (18) with respect to the wheel hub (14) is prevented by engagement of said retaining part (56) with said abutment surface (58).

2. The locking assembly (16) of claim 1, wherein said hub central tubular portion (60) comprises an outer peripheral groove (62), a first axial end edge of which forming said abutment surface (58).

3. The locking assembly (16) of claim 1, wherein said hub central tubular portion (60) comprises an outer ratchet ring (84), a tooth (86) of which comprising a retaining edge (90) forming said abutment surface (58).

4. The locking assembly (16) of any one of the preceding claims, wherein the at least one securing means (42) comprises a control surface (74) which is configured to cooperate with a release extension (76) of a screw tool (20) to move the at least one securing means (42) towards its release position.

5. The locking assembly (16) of one of the preceding claims, wherein the locking element (18) comprises a sleeve portion (50) provided with at least one opening (64), said retaining part (56) being able to move through the at least one opening (64) between the release position and the locking position.

6. The locking assembly (16) of any one of the preceding claims, wherein the at least one securing means (42) is biased towards the locking position thanks to a return spring (68).

7. The locking assembly (16) of claim 6, wherein the securing means (42) comprises at least one locking lever (44) which is pivotable about a pivot axle (52) parallel to the wheel hub main axis (A1).

8. The locking assembly (16) of claim 7, wherein said retaining part (56) is arranged on a locking lever first arm portion (54) and said control surface (74) is arranged on a locking lever second arm portion (66), said pivot axle (52) being positioned between said locking lever first arm portion (54) and said locking lever second arm portion (66).

9. The locking assembly (16) of any one of claims 6 to 8, wherein each locking lever (44) has an attachment portion for a return spring first end, a return spring second end being attached to a locking element attachment portion (72).

10. The locking assembly (16) of any one of the preceding claims in combination with claim 7, wherein said securing means (42) comprises at least three locking levers (44) distributed regularly around the wheel hub main axis (A1).

11. The locking assembly (16) of any one of the preceding claims, wherein the locking element (18) comprises an annular receiving portion (24) able to receive into engagement a screw tool complementary annular engagement portion (22).

12. The locking assembly (16) of claim 11, wherein the annular receiving portion (24) comprises a plurality of engagement cavities (78) complementary to screw tool engagement pins (80).

13. A locking system (10) comprising the locking assembly (16) of any one of the preceding claims in combination with claim4, comprising a screw tool (20) having at least one annular engagement portion (22) complementary to an annular receiving portion (24) of the locking element (18) and having a central release extension (76) configured to cooperate with said securing means (42) control surface (74) to move said securing means (42) into their release position when the screw tool (20) is engaged with the locking element (18) for screwing or unscrewing.
